# DEMANDE DE BREVET EUROPEEN

(11) **EP 0 867 111 A1**
(43) Date de publication de la demande: **30.09.1998**
(21) Numéro de dépôt: 98460003.1
(22) Date de dépôt: 27.02.1998
(51) Int. Cl.: A01K 1/00

(54) **Case pour un animal, notamment une truie pendant sa période de gestation, un élément de paroi qui est prévu pour constituer une telle case pour animal et l'installation pourvue d'une pluralité de telles cases**

(30) Priorité: 10.03.1997 FR 9703149
(71) Demandeur: GALVELPOR SA, 29419 Landerneau Cedex (FR)
(72) Inventeur: Holden, Graham, 29470 Lougastel Daoulas (FR); Loaec, Jean-Pierre, 29490 Guipavas (FR); Guedes, Y., 29460 Daoulas (FR)
(74) Mandataire: Maillet, Alain

(57) **Abrégé**

La présente invention concerne une case pour un animal, notamment une truie pendant sa période de gestation, ainsi qu'une installation pourvue d'une pluralité de telles cases. La présente invention concerne également un élément de paroi qui est prévu pour constituer une telle case pour animal.

Selon l'invention, ladite case est caractérisée en ce que l'un au moins desdits éléments de paroi (11) est constitué d'un panneau principal (11a) fixe et, à l'arrière dudit panneau principal (11a), d'un panneau escamotable (11b) qui est prévu pour pouvoir prendre relativement audit panneau principal, une première position où lesdits deux panneaux (11a et 11b) sont sensiblement dans le prolongement l'un de l'autre et une seconde position où ledit panneau escamotable (11b) est escamoté.

## Description

La présente invention concerne une case pour un animal, notamment une truie pendant sa période de gestation, ainsi qu'une installation pourvue d'une pluralité de telles cases. La présente invention concerne également un élément de paroi qui est prévu pour constituer une telle case pour animal.

On connaît déjà des cases pour animaux et on citera à titre d'exemple le document de brevet FR-A-2 682 852 qui décrit une telle case pour une truie.

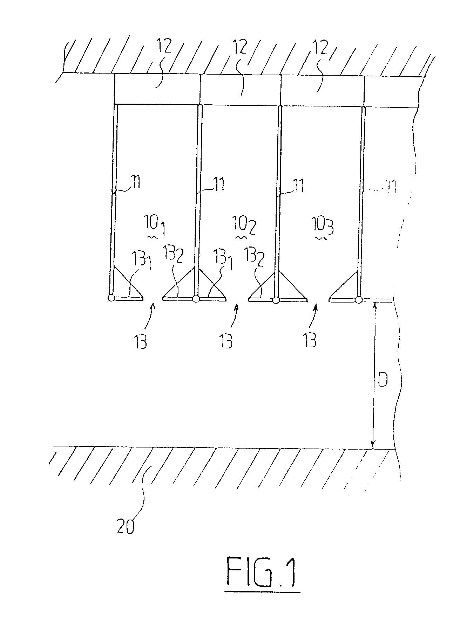

A la Fig. 1, on a représenté schématiquement, vue de dessus, trois cases contiguës 10₁, 10₂ et 10₃ dont chacune d'elles est essentiellement constituée de deux éléments 11, que l'on appellera par la suite éléments de paroi, formant les deux parois latérales de ladite case. Comme on peut le constater sur la Fig. 1, dans une installation d'élevage, un élément de paroi 11 est commun à deux cases contiguës. Aux parties avant de ces éléments de paroi 11, est fixée une auge 12 pour l'alimentation de l'animal alors qu'aux parties arrière, est fixé un système de fermeture 13 qui est soit à porte simple soit, comme cela est représenté, à deux ventaux 13₁ et 13₂.

Pour permettre à la truie qui est dans une case de sortir de celle-ci (ou d'y entrer), il est souhaitable qu'elle dispose de suffisamment de place pour manoeuvrer. Ceci oblige à concevoir l'installation avec, derrière la case, un espace qui ait au moins une dimension de 1 mètre, voire de 1,20 mètre. Dans l'exemple de la Fig. 1, cet espace est limité par un mur 20 à l'arrière de la case. La distance considérée est celle qui est marquée D. On notera qu'à la place du mur 20, il pourrait s'agir d'une autre rangée de cases contiguës.

Dans le cas de bâtiments existants où l'on souhaite installer des cases telles qu'il vient d'être décrit, il peut se faire que le couloir dans lequel doivent être installées les cases ne soit pas d'une dimension suffisante pour permettre aux truies de manoeuvrer aisément pour entrer ou sortir de leurs cases. Cela signifie qu'à la Fig. 1, la distance D est inférieure de beaucoup à 1,30 mètre, par exemple seulement 0,60 mètre.

On a résolu ce problème particulier en prévoyant une case dont le système de fermeture est constitué d'une porte prévue pour pouvoir pivoter autour d'un axe horizontal transversal qui se situe légèrement en retrait sur chacun des éléments de paroi, par exemple à 0,60 mètre de l'extrémité arrière de la case. En escamotant la porte vers le haut, on libère l'emplacement occupé par elle lorsqu'elle était fermée si bien que la truie a suffisamment d'espace pour manoeuvrer.

Ce système particulier présente l'inconvénient d'être relativement complexe à mettre en oeuvre, et par conséquent coûteux à la fabrication et donc à la vente. De plus, il est relativement difficile à manoeuvrer car la porte s'avère lourde à la longue.

La présente invention se propose de résoudre ce problème avec une case dont l'un au moins desdits éléments de paroi est constitué d'un panneau principal fixe et, à l'arrière dudit panneau pnncipal, d'un panneau escamotable qui est prévu pour pouvoir prendre relativement audit panneau principal, une première position où lesdits deux panneaux sont sensiblement dans le prolongement l'un de l'autre et une seconde position où ledit panneau escamotable est escamoté.

Selon un mode avantageux, ledit panneau escamotable est prévu pour pouvoir pivoter par rapport audit panneau principal autour d'un axe vertical de manière à pouvoir prendre ladite première position où lesdits deux panneaux sont dans le prolongement l'un de l'autre et une seconde position où le panneau escamotable forme un dièdre avec le panneau principal.

Ainsi, en utilisation normale où la truie séjourne dans une case, le ou chaque panneau escamotable est dans la première position. Pour faire sortir une truie d'une case, on fait pivoter, dans la direction de sortie de l'animal, le panneau escamotable de l'élément qui se trouve du côté vers lequel se dirige l'animal pour sortir, de manière qu'il prenne sa seconde position. L'espace normalement occupé par l'arrière de la case est maintenant libéré pour la sortie de l'animal qui dispose de suffisamment de place pour manoeuvrer.

Selon une autre caractéristique de l'invention, la longueur dudit panneau escamotable est sensiblement égale à la largeur d'une case.

Selon une autre caractéristique de l'invention, ladite case comporte des moyens de fermeture qui sont montés sur l'un au moins desdits panneaux escamotables desdits éléments de paroi ou le panneau escamotable dudit élément de paroi. Ces moyens de fermetures sont par exemple constitués de deux ventaux et respectivement montés sur les éléments de paroi de ladite case.

La présente invention concerne également un élément de paroi d'une case pour animal. Selon une caractéristique essentielle de l'invention, il est constitué d'un panneau principal prévu pour être monté fixe et d'un panneau escamotable qui est prévu pour pouvoir prendre relativement audit panneau principal, une première position où lesdits deux panneaux sont sensiblement dans le prolongement l'un de l'autre et une seconde position où ledit panneau escamotable est escamoté.

Avantageusement, ledit panneau escamotable est prévu pour pouvoir pivoter par rapport audit panneau principal autour d'un axe vertical de manière à pouvoir prendre ladite première position où lesdits deux panneaux sont dans le prolongement l'un de l'autre et ladite seconde position où le panneau escamotable forme un dièdre avec le panneau principal.

Avantageusement, la longueur dudit panneau escamotable est sensiblement égale à la largeur des cases qu'il est destiné à délimiter.

Par ailleurs, il peut comporter un mécanisme de verrouillage du panneau escamotable dans ladite première position où lesdits deux panneaux sont dans le prolongement l'un de l'autre Ledit mécanisme de verrouillage comprend avantageusement des moyens pour supporter ledit panneau escamotable lorsqu'il est dans sa première position ainsi que des moyens de butée pour le bloquer en rotation dans cette position et une tige matérialisant l'axe de pivotement du panneau escamotable.

Dans un mode de réalisation préférentielle, lesdits moyens de support et lesdits moyens de butée sont respectivement formés par l'âme et par les ailes d'au moins une patte en forme de "U" à l'intérieur de laquelle ou de chacune desquelles une branche du panneau escamotable peut venir se loger, ledit panneau escamotable pouvant coulisser verticalement dans son propre plan afin que ladite ou chacune desdites branches puisse se libérer dudit moyen de butée correspondant afin que ledit panneau escamotable puisse pivoter autour de son axe de pivotement.

Lesdits moyens de butée peuvent comporter en outre un élément prévu pour venir coiffer ladite ou chaque patte ledit élément étant solidaire d'au moins une branche dudit panneau escamotable.

Dans un mode de réalisation préférentielle, ledit mécanisme de verrouillage comporte des moyens de blocage pour interdire le coulissement vertical dudit panneau escamotable. Lesdits moyens de blocage sont par exemple constitués d'une came prévue pour pouvoir pivoter autour d'un axe horizontal perpendiculaire au plan dudit élément de paroi, ladite came pouvant prendre une première position où sa surface est en contact avec la partie haute dudit panneau escamotable afin de l'immobiliser et une seconde position où sa surface n'est plus en contact avec ladite partie haute, laissant le panneau escamotable libre de pouvoir s'escamoter.

Avantageusement, ledit panneau escamotable comporte des moyens pour la fixation des moyens de fermeture d'au moins une des deux cases qu'il est destiné à délimiter.

La présente invention concerne également une installation d'élevage d'animaux constituée d'une pluralité de cases contiguës pour loger des animaux, notamment des truies en période de gestation, chacune desdites case étant constituée de deux éléments de parois formant les parois latérales de ladite case, un élément de paroi étant commun à deux cases contiguës. Elle est caractérisée en ce que chacun desdits éléments de paroi est conforme à des éléments de paroi tels qu'il vient d'être décrit.

Les caractéristiques de l'invention mentionnées ci-dessus, ainsi que d'autres, apparaîtront plus clairement à la lecture de la description suivante d'un exemple de réalisation faite en relation avec les dessins joints parmi lesquels :
la Fig. 1 est une vue schématique de dessus d'une installation d'élevage selon l'art antérieur,
la Fig. 2 est une vue schématique de dessus d'une installation d'élevage dont les cases sont équipées d'un élément de paroi selon l'invention,
la Fig. 3 représente une vue de côté d'un élément de paroi selon la présente invention,
la Fig. 4 est une vue en pièces détachées du montage d'un panneau escamotable sur un panneau principal d'un élément de paroi selon l'invention, et
les Figs. 5a et 5b montrent respectivement un système de blocage selon l'invention en position de blocage et le même système de blocage dans sa position débloquée.

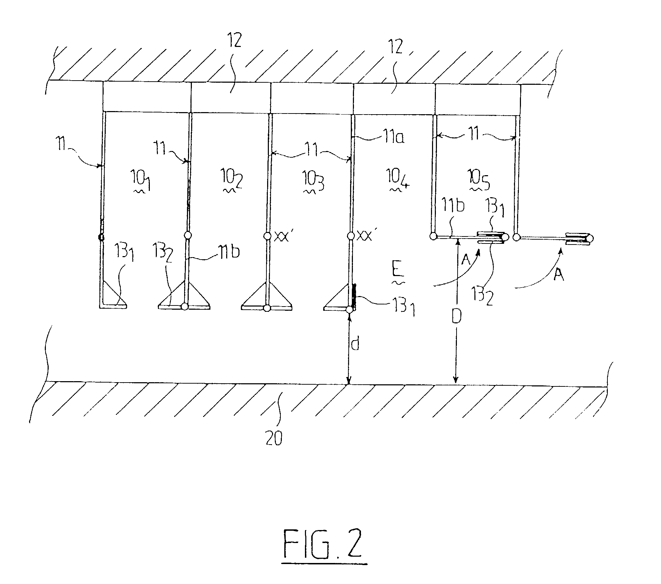

A la Fig. 2, on voit les mêmes éléments qu'à la Fig. 1 portant les mêmes références. En particulier, on voit cinq cases contiguës 10₁ à 10₅ respectivement formées par des éléments de paroi 1 1 (un élément de paroi 11 est commun à deux cases contiguës) auxquels sont fixés respectivement à l'avant de chaque case une auge 12 et à l'arrière de ladite case un système de fermeture 13 Pour des raisons qui seront explicitées par la suite, le système de fermeture 13 est avantageusement à deux ventaux 13₁ et 13₂.

Selon l'invention, chaque élément de paroi 11 est constitué d'un panneau principal 11a prévu pour être monté fixe, par exemple sur le sol de la porcherie, et d'un panneau escamotable 11b qui est prévu pour pouvoir prendre relativement audit panneau principal 11a, une première position où lesdits deux panneaux 11a et 11b sont sensiblement dans le prolongement l'un de l'autre et une seconde position où ledit panneau escamotable 11b est escamoté.

Dans les modes de réalisation représentés, le panneau escamotable 11b est prévu, pour pouvoir être escamoté, pour pivoter par rapport audit panneau principal 11a autour d'un axe vertical xx' de manière à pouvoir prendre ladite première position où lesdits deux panneaux 11a et 11b dudit élément de paroi 11 sont en prolongement l'un de l'autre et ladite seconde position où le panneau escamotable 11b forme un dièdre avec le panneau principal 11a.

On comprendra que d'autres modes de réalisation peuvent être mis en oeuvre pour rendre le panneau 11b escamotable, sans qu'il soit nécessairement pivotant.

Sur la Fig. 2, on comprend le fonctionnement de l'invention. Les cases 10₁, 10₂ et 10₃ sont dans leur état normal dans lequel elles sont fermées, par exemple pour y loger une truie. La case 10₄ a son élément de paroi à droite sur la figure qui a pivoté (flèche A) dans la direction de sortie de l'animal. Elle libère ainsi l'espace E qui était occupé auparavant par l'arrière de la case lorsque le panneau 11b se trouvait dans le prolongement du panneau principal 11a. La dimension de cet espace E est celle du panneau escamotable 11b. L'espace libre pour permettre à l'animal de manoeuvrer a donc la largeur D qui est égale à la distance d séparant l'extrémité arrière de la case du mur 20 additionnée à la dimension du panneau escamotable 11b. Par exemple, si l'on considère un panneau 11b de dimension égale à 0,60 mètre, pour une largeur D au moins égale à 1,20 mètre, la distance d devra être égale à au moins 0,60 mètre.

On constate sur la Fig. 2 2 que la case 10₅ est fermée par le panneau 11b de l'élément de paroi 11 commun à la case 10₅ et à la case 10₄. On comprendra qu'aucun animal ne peut être logé dans la case 10₅ En conséquence, l'éleveur devra faire sortir les animaux en commençant par la case (ici la case 10₅) située du côté de sortie des animaux puis, à chaque fois, la case juste contiguë à l'autre côté.

Le panneau 11b d'une case (considérons la case 104 à titre d'exemple) doit fermer au moins partiellement la case contiguë (10₅) de manière à éviter qu'un animal ne puisse, en sortant de sa propre case (10₄), entrer dans la case contiguë (10₅) ou de manière qu'en étant destiné à entrer dans une case (10₄), il ne puisse pas entrer dans celle qui est lui contiguë (10₅), ou ne puisse pas entrer en contact avec l'animal qui s'y trouve déjà Pour fermer complètement la case contiguë, le panneau 11b doit présenter une longueur correspondant sensiblement à la largeur d'une case. Dans le présent texte, on appelle longueur du panneau escamotable 11b sa dimension dans le sens longitudinal de la case. Généralement, les cases dans les porcheries existantes ont une largeur de 0,60 mètre. Aussi, dans ce cas, le panneau 11b présente avantageusement une longueur de 0,60 mètre.

A la Fig. 2, on a représenté une installation avec des cases 10₁ à 10₅ qui sont pourvues de systèmes de fermeture à deux ventaux 13₁ et 13₂.

On constate que les ventaux 13₁ et 13₂ qui sont montés sur le panneau 11b qui a pivoté sur la Fig. 2 sont en position ouverte dans laquelle ils sont logés contre le panneau 11b lui-même. Chaque ventail 13₁ est en fait ouvert alors que le panneau 11b n'est par encore pivoté (ce qui est le cas du panneau 11b de l'élément 11 commun aux cases 10₃ et 10₄) afin de libérer l'espace E pour la sortie de l'animal. Par contre, chaque ventail 13₂ est ouvert au moment du pivotement du panneau 11b (ce qui est le cas du panneau 11b de l'élément 11 commun aux cases 10₄ et 10₅).

En ce qui concerne chaque ventail 13₁, l'éleveur peut le laisser en position fermée dans la mesure où il pense que l'animal a suffisamment d'espace pour manoeuvrer

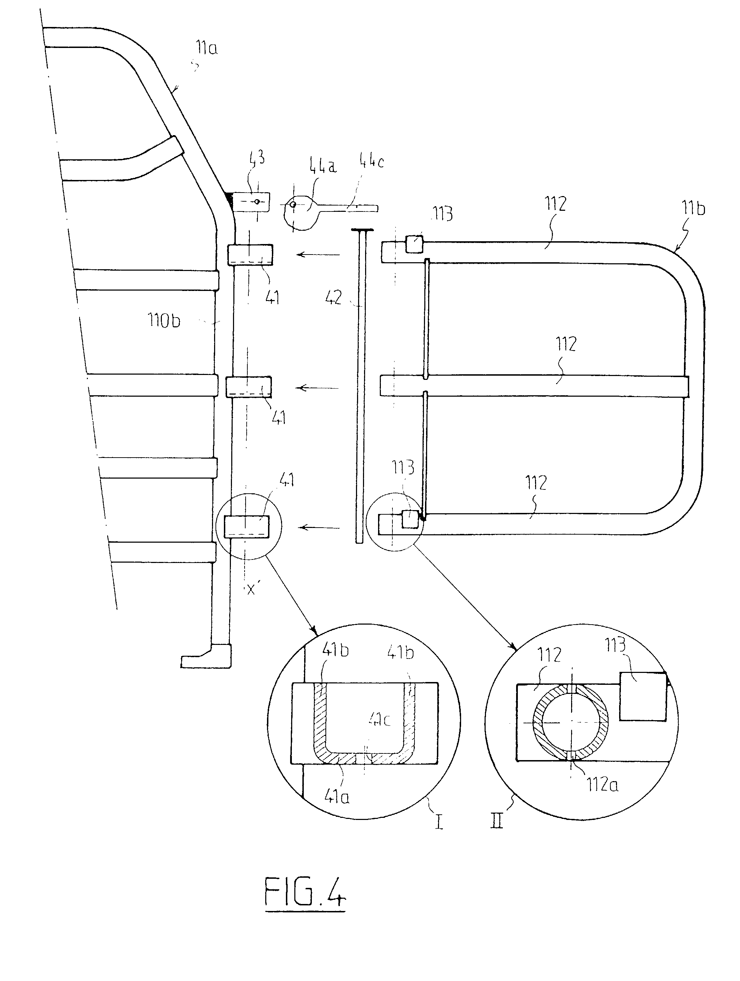

On notera que, si un système de fermeture de l'installation est à simple porte, celle-ci pourra être mise soit à la place du ventail 13₁ du système représenté à la Fig. 4, soit à la place du ventail 13₂ du même système et être utilisée de la même manière que ce ventail.

On notera que l'on a considéré jusqu'ici la sortie des animaux des cases mais on comprendra que l'avantage tiré de l'invention vaut également pour l'entrée des animaux dans les mêmes cases qui nécessite la même manoeuvre.

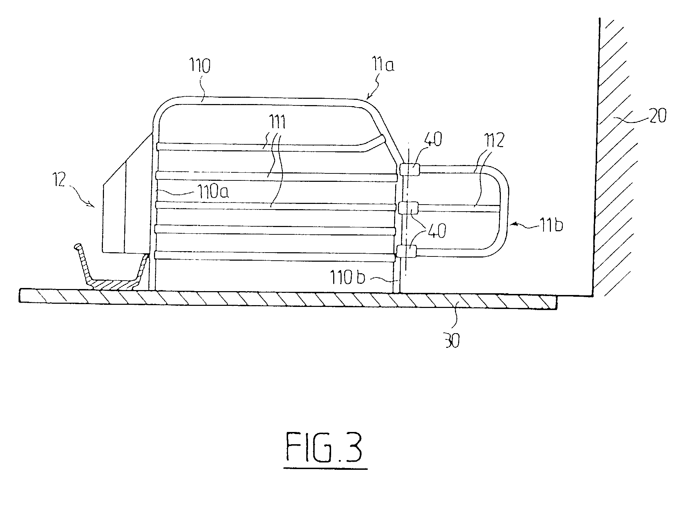

On a représenté à la Fig. 3 un élément de paroi 11 selon l'invention. On voit que cet élément 11 est constitué, d'une part, d'un panneau principal 11a et d'autre part, d'une panneau escamotable 11b prévu pour pouvoir pivoter autour d'un axe vertical xx'

Le panneau principal 11a est dans une structure tubulaire avec, d'une part, un arceau 110 en forme générale de "U" renversé dont les extrémités des montants 110a et 110b sont pourvues de pattes (non représentées) pour la fixation de l'élément de paroi 11 au sol 30 et; d'autre part, des tubes horizontaux 111, ici au nombre de cinq, reliant les montants 110a et 110b de l'arceau 110. Sur le montant 110a avant, sont montées les auges 12 des cases que l'élément de paroi 11 considéré délimite. Sur le montant 110b arrière, sont fixés des supports 40 sur lesquels est monté le panneau escamotable 11b.

Quant au panneau 11b, il est également de structure tubulaire en forme de E inversé, avec des branches 112 (ici au nombre de trois) dont les extrémités sont respectivement fixées sur les supports 40.

Sur la Fig. 3, on n'a pas représenté le système de fermeture 13 de la case pour des raisons de clarté.

A la Fig. 4, on a représenté, en pièces détachées, les moyens de fixation du panneau escamotable 11b sur le montant arrière 110b du panneau principal 11a. Comme on le comprendra par la suite, ces moyens constituent également un mécanisme de verrouillage du panneau escamotable 11b sur le panneau principal 11a. Ces moyens sont constitués de pattes 41 directement fixées sur le montant 110b du panneau principal 11a Chaque patte a une section en forme de "U" (comme cela est visible dans l'encart I de la Fig. 4) avec une âme 41a et deux ailes 41b Chaque patte 41 est prévue pour loger l'extrémité d'une branche 112 du panneau escamotable 11b. L'âme 4 la de chaque patte 41 est percée d'un trou 41c et la branche 112 est également percée d'un trou 112a (voir encart II de la Fig. 4). Les trous 41c et 112a sont prévus pour, le mécanisme étant monté, être alignés les uns aux autres et permettre le passage d'une tige 42 matérialisant l'axe xx' de pivotement du panneau 11b. Cette tige 42 est pourvue d'une tête 42a reposant sur la partie haute de la branche 112 supérieure afin de servir de butée

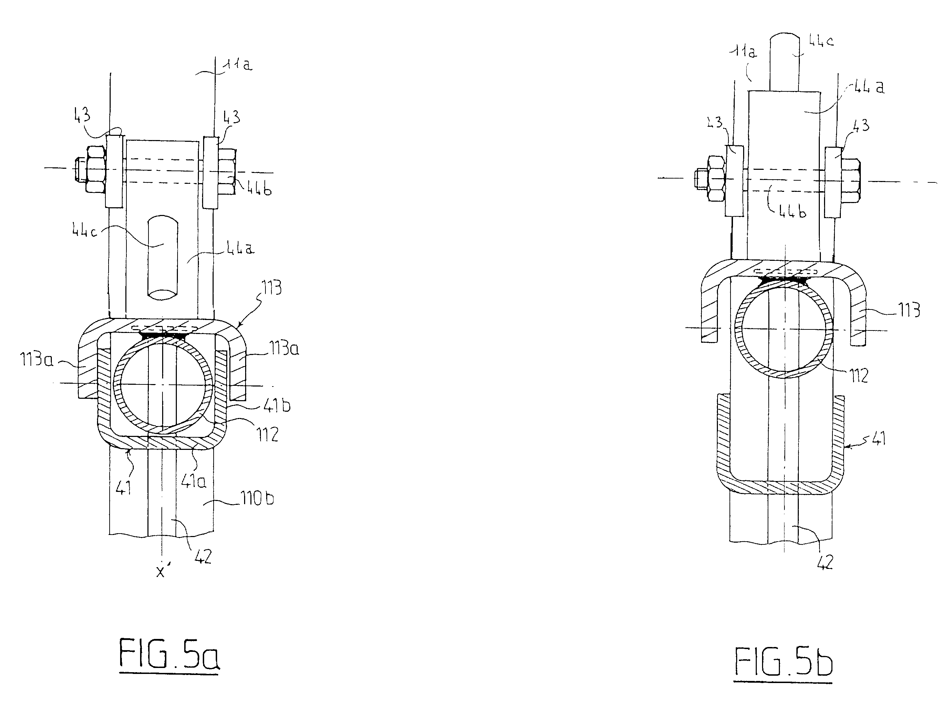

Sur une chape 43 fixée à l'extrémité haute du montant 110b, au moyen d'un axe 44b (voir Figs. 5a et 5b), pivotante autour d'un axe horizontal perpendiculaire au plan du panneau 11a, une came 44a munie d'un levier 44c. Cette came 44a est par exemple constituée d'un disque, l'axe de pivotement dudit disque étant décentré par rapport à l'axe du disque Cette came 44a peut ainsi prendre deux positions, comme cela est notamment visible sur les Figs. 5a et 5b, la première pour laquelle elle est en contact avec la branche 112 supérieure, empêchant ainsi le panneau 11b de s'escamoter et une seconde position où au contraire le panneau peut être escamoté.

Le fonctionnement de ce mécanisme est maintenant décrit en relation avec les Figs.5a et 5b sur lesquelles les mêmes éléments qu'à la Fig. 4 sont représentés avec les mêmes références.

A la Fig. 5a, ce mécanisme est en position verrouillée dans laquelle le panneau escamotable 11b est bloqué dans le même plan que le panneau principal 11a d'un élément de paroi 11. On constate sur cette Fig. 5a que la branche 112 est logée l'intérieur du "U" formé par la patte 41, l'âme 41a ayant une fonction de support pour la branche 112 et donc le panneau 11b et les ailes 41b jouant le rôle de butée pour éviter audit panneau de pivoter autour de l'axe xx'.

Pour améliorer encore le verrouillage en rotation, on a prévu, fixé, par exemple par soudage, sur chaque branche 112, un élément 11 3 en "U" renversé qui vient coiffer la patte 41. Les ailes 113a de chaque élément 113 sont prévues pour se trouver parallèles aux ailes 41b de la patte 41 correspondante de manière à éviter, lorsque l'élément 113 coiffe la patte 41, le pivotement du panneau 11b par rapport au panneau principal 11a.

La came 44a est dans sa première position où sa surface est en contact avec la partie haute de la branche 112 supérieure. Ainsi, le panneau 11b ne peut être manoeuvré pour coulisser dans son propre plan vers le haut.

Pour le faire, il est nécessaire que la came 44a soit escamotée comme le montre la Fig. 5b, c'est-à-dire en la faisant pivoter autour de son axe. Rien ne s'oppose alors à ce que l'on puisse faire coulisser le panneau 11b dans son propre plan et ce jusqu'à une hauteur telle que la branche 112 ne soit plus logée dans la patte 41 correspondante et que l'élément 113 ne coiffe plus ladite patte 41. Dans cette position, le panneau 11b peut être pivoté par rapport au panneau principal 11a et ce, autour de l'axe formé par la tige 42.

## Revendications

1. Case pour un animal, notamment pour une truie pendant sa période de gestation, du type qui est constituée de deux éléments de parois formant les parois latérales de ladite case, caractérisée en ce que l'un au moins desdits éléments de paroi (11) est constitué d'un panneau principal (11a) fixe et, à l'arrière dudit panneau principal (11a), d'un panneau escamotable (11b) qui est prévu pour pouvoir prendre relativement audit panneau principal, une première position où lesdits deux panneaux (11a et 11b) sont sensiblement dans le prolongement l'un de l'autre et une seconde position où ledit panneau escamotable (11b) est escamoté.

2. Case pour un animal selon la revendication 1, caractérisée en ce que ledit panneau escamotable (11b) est prévu pour pouvoir pivoter par rapport audit panneau principal (11a) autour d'un axe vertical (xx') de manière à pouvoir prendre ladite première position où lesdits deux panneaux (11a et 11b) sont dans le prolongement l'un de l'autre et une seconde position où le panneau escamotable (11b) forme un dièdre avec le panneau principal (11a).

3. Case pour un animal selon la revendication 1 ou 2, caractérisée en ce que la dimension dudit panneau escamotable (11b) est sensiblement égale à la largeur d'une case.

4. Case pour un animal selon une des revendications 1 à 3, caractérisée en ce qu'elle comporte des moyens de fermeture (13) qui sont montés sur l'un au moins desdits panneaux escamotables (11b) desdits éléments de paroi (11) ou le panneau escamotable (11b) dudit élément de paroi (11).

5. Case pour animal selon la revendication 4, caractérisée en ce que lesdits moyens de fermeture (13) sont constitués de deux ventaux (13₁ et 13₂) respectivement montés sur les éléments de paroi (11) de ladite case.

6. Elément de paroi d'une case pour animal, caractérisé en ce qu'il est constitué d'un panneau principal (11a) prévu pour être monté fixe et d'un panneau escamotable (11b) qui est prévu pour pouvoir prendre relativement audit panneau principal (11a), une première position où lesdits deux panneaux (11a et 11b) sont sensiblement dans le prolongement l'un de l'autre et une seconde position où ledit panneau escamotable (11b) est escamoté.

7. Elément de paroi d'une case pour animal selon la revendication 6, caractérisé en ce que ledit panneau escamotable (11b) est prévu pour pouvoir pivoter par rapport audit panneau principal (11a) autour d'un axe vertical (xx') de manière à pouvoir prendre ladite première position où lesdits deux panneaux (11a et 11b) sont dans le prolongement l'un de l'autre et ladite seconde position où le panneau escamotable (11b) forme un dièdre avec le panneau principal (11a).

8. Elément de paroi d'une case pour animal selon la revendication 7, caractérisé en ce que la longueur dudit panneau escamotable (11b) est sensiblement égale à la largeur des cases qu'il est destiné à délimiter.

9. Elément de paroi d'une case pour animal selon une des revendications 6 à 8, caractérisé en ce qu'il comporte un mécanisme de verrouillage du panneau escamotable (11a) dans ladite première position où lesdits deux panneaux sont dans le prolongement l'un de l'autre.

10. Elément de paroi d'une case pour animal selon la revendication 9, caractérisé en ce que ledit mécanisme de verrouillage comprend des moyens (41a) pour supporter ledit panneau escamotable (11b) lorsqu'il est dans sa première position ainsi que des moyens de butée (41b) pour le bloquer en rotation dans cette position et une tige (42) matérialisant l'axe de pivotement (xx') du panneau escamotable (11b).

11. Elément de paroi d'une case pour animal selon la revendication 10, caractérisé en ce que lesdits moyens de support (41a) et lesdits moyens de butée (41b) sont respectivement formés par l'âme (41a) et par les ailes (41b) d'au moins une patte en forme de "U" à l'intérieur de laquelle ou de chacune desquelles une branche (112) du panneau escamotable (11b) peut venir se loger, ledit panneau escamotable (11b) pouvant coulisser verticalement dans son propre plan afin que ladite ou chacune desdites branches (112) puisse se libérer dudit moyen de butée (41b) correspondant afin que ledit panneau escamotable (11b) puisse pivoter autour de son axe de pivotement (xx').

12. Elément de paroi d'une case pour animal selon la revendication 11, caractérisé en ce que lesdits moyens de butée peuvent comporter en outre un élément (113) prévu pour venir coiffer ladite ou chaque patte (41), ledit élément (113) étant solidaire d'au moins une branche (112) dudit panneau escamotable (11b).

13. Elément de paroi d'une case pour animal selon la revendication 11 ou 12, caractérisé en ce que ledit mécanisme de verrouillage comporte des moyens de blocage pour interdire le coulissement vertical dudit panneau escamotable (11b).

14. Elément de paroi d'une case pour animal selon la revendication 13, caractérisé en ce que lesdits moyens de blocage sont constitués d'une cale prévue pour pouvoir pivoter autour d'un axe horizontal, le bord inférieur de ladite cale étant prévu pour venir en quasi contact à un jeu de quelques millimètres près avec la partie haute dudit panneau escamotable (11b).

15. Elément de paroi d'une case pour animal selon une des revendications 6 à 14, caractérisé en ce que ledit panneau escamotable (11b) comporte des moyens pour la fixation des moyens de fermeture (13) d'au moins une des deux cases qu'il est destiné à délimiter.

16. Installation d'élevage d'animaux constituée d'une pluralité de cases contiguës pour loger des animaux, notamment des truies en période de gestation, chacune desdites case étant constituée de deux éléments de parois formant les parois latérales de ladite case, un élément de paroi étant commun à deux cases contiguës, caractérisée en ce que chacun desdits éléments de paroi est conforme à des éléments de paroi selon une des revendications 6 à 15.
